**Europäisches Patentamt**

**European Patent Office**

**Office européen des brevets**

(19)

(11) Publication number: **0 241 214**

**A2**

(12) **EUROPEAN PATENT APPLICATION**

(21) Application number: **87302858.3**

(22) Date of filing: **01.04.87**

(51) Int. Cl.³: **H 04 N 9/82**

(30) Priority: **08.04.86 JP 80886/86**

(43) Date of publication of application:
**14.10.87 Bulletin 87/42**

(84) Designated Contracting States:
**DE FR GB NL**

(71) Applicant: **SONY CORPORATION**
**7-35 Kitashinagawa 6-Chome Shinagawa-ku**
**Tokyo 141(JP)**

(72) Inventor: **Kaneko, Shinji c/o Patents Division**
**Sony Corporation 6-7-35 Kitashinagawa**
**Shinagawa-ku Tokyo 141(JP)**

(74) Representative: **Thomas, Christopher Hugo et al,**
**D Young & Co 10 Staple Inn**
**London WC1V 7RD(GB)**

(54) Video noise reduction circuits.

(57) A video noise reduction circuit for use in a video signal recording apparatus records red, blue and green primary colour component video signals on a plurality of separate tracks of a magnetic recording medium. The component video signals are supplied to a matrix circuit (2) which produces a wide-band luminance signal. A band splitter circuit (10) splits the wide-band luminance signal into an upper-band luminance signal and a lower-band luminance signal, and an expansion circuit (14) expands the low level components of the upper-band luminance signal before the upper-band luminance signal is frequency modulated. Since the expansion circuit (14) follows the band splitter circuit (10) having a flat phase versus frequency characteristic, the video noise reduction circuit can reduce video noise without causing distortion of the frequency modulated video signal.

*FIG.5*

## VIDEO NOISE REDUCTION CIRCUITS

This invention relates to video noise reduction circuits.

In high definition video tape recorders (VTRs), component video signals are frequency modulated before they are recorded on a recording medium. Such frequency modulation may cause increased noise to be introduced into a high frequency signal component, so deteriorating the picture quality, particularly the resolution. Although various measures have been proposed to reduce video noise caused by frequency modulation, they are not always sufficiently effective.

According to the present invention there is provided a video noise reduction circuit for use in a recording apparatus for recording red, blue and green primary colour component video signals on a plurality of separate tracks of a magnetic recording medium, the circuit comprising:

means for frequency modulating the red and blue primary colour component video signals and recording the frequency modulated signals on separate tracks of the magnetic recording medium; and

a matrix circuit for matrixing the red, blue and green primary colour component video signals to provide a wide-band luminance signal; characterized by:

a band splitter circuit connected to the matrix circuit for splitting the wide-band luminance signal into lower and upper-band luminance signals;

means connected to the band splitter circuit for expanding the low level component of the upper-band luminance signal to produce a level expanded upper-band luminance signal;

an adder circuit for adding the lower-band luminance signal and the level expanded upper-band luminance signal;

means connected to the adder circuit for time-base expanding the added luminance signal and separating the time-base expanded luminance signal into narrow-band luminance signals; and

means for frequency modulating the narrow-band luminance signals and recording the frequency modulated signals on separate tracks of the magnetic recording medium.

The invention will now be described by way of example with reference to the accompanying drawings, throughout which like parts are referred to by like references, and in which:

Figure 1 is a schematic block diagram showing a previously proposed VTR;

Figure 2 is a fragmentary enlarged plan view of four adjacent recording tracks on a magnetic recording medium;

Figure 3 is a graph showing the frequency bands of respective video signal components;

Figure 5 is a schematic block diagram showing an embodiment of video noise reduction circuit according to the invention;

Figures 6A and 6B are graphs showing the frequency bands of lower and upper-band luminance signals;

Figure 7 is a graph showing the phase versus frequency characteristic of a band splitter circuit;

Figure 8A is a graph showing the output versus input characteristic of an expansion circuit;

Figure 8B is a graph showing the output versus input characteristic of a compression circuit;

Figure 9 is a schematic block diagram showing a video noise reduction circuit incorporated into a video signal reproducing apparatus; and

Figure 10 is a graph showing the effect of frequency on video noise level.

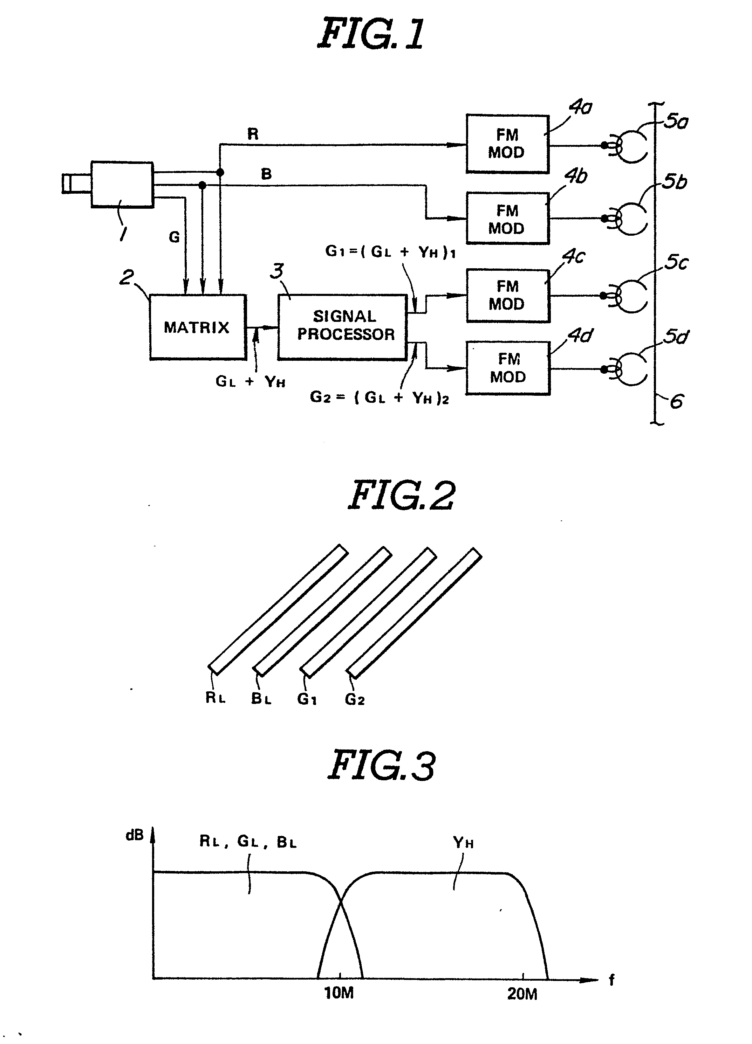

Referring to Figure 1, a previously proposed VTR of the high definition type recording information with 1125 or more horizontal scanning lines, is shown as receiving red, blue and green primary colour component video signals R, B and G from a video source 1 such as a colour television camera. The red primary colour component video signal R is supplied to an FM modulator 4a which converts it into a corresponding FM signal which is supplied to a first magnetic head 5a for recording the red primary colour component video signal R on the first track, as shown in Figure 2. Similarly, the blue primary colour component video signal B is supplied to an FM modulator 4b which converts it into a corresponding FM signal which is supplied to a second magnetic head 5b for recording the blue colour component video signal B on the secnd track, as shown in Figure 2.

The three component video signals R, B and G are supplied to a matrix circuit 2 which matrixes them to produce a 20 MHz bandwidth wide-band luminance signal $G_L+Y_H$ which includes a lower-band luminance signal $G_L$ and an upper-band luminance signal $Y_H$. The wide-band luminance signal $G_L+Y_H$ is supplied to a signal processing circuit 3 which time-base expands it and splits the time-base expanded signal into first and second narrow-band luminance signals $G_1=(G_L+Y_H)_1$ and $G_2=(G_L+Y_H)_2$ having a doubled time axis and halved bandwidth (10 MHz). The first narrow-band luminance signal $G_1$ is supplied to an FM modulator 4c which converts it into a corresponding FM signal which is supplied to a third magnetic head 5c for recording the first narrow-band luminance signal $G_1$ on the third track, as shown in Figure 2. Similarly, the second narrow-band luminance signal G2 is supplied to an FM modulator 4d which converts it into a corresponding FM signal which is supplied to a fourth magnetic head 5d for recording the second narrow-band luminance signal $G_2$ on the fourth track, as shown in Figure 2. Figure 3 is a diagram showing the bands corresponding to the respective components of the component video signals.

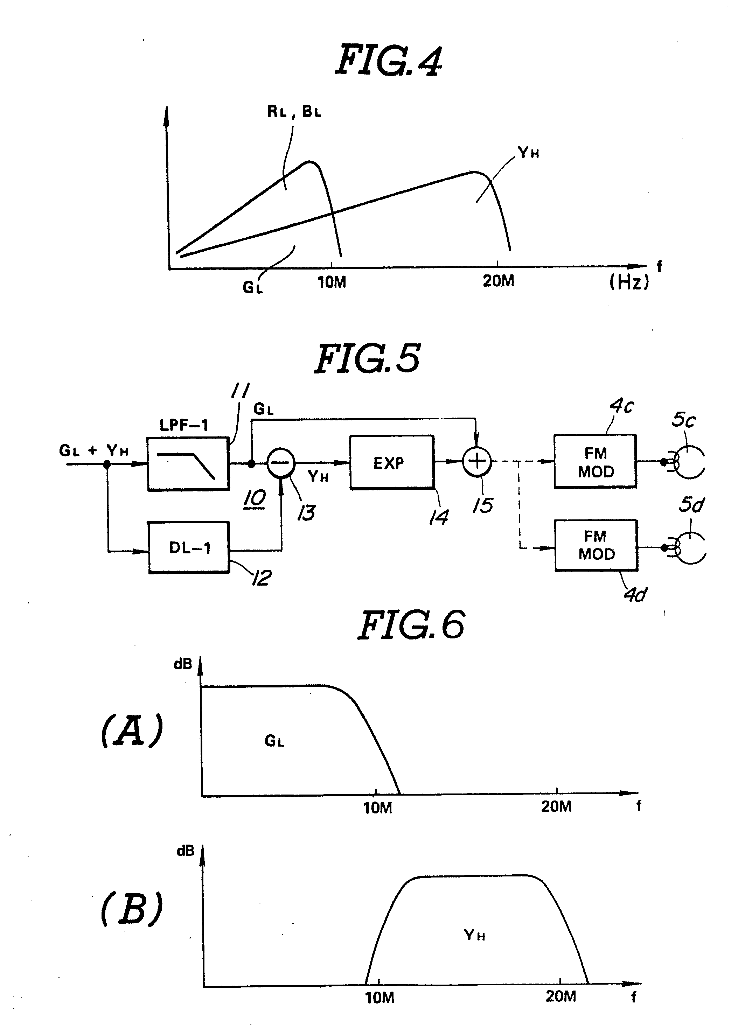

In high definition VTRs, component video signals are frequency modulated before they are recorded on a recording medium, and this may cause introduction of increased noise to a higher frequency signal component, as shown in Figure 4, to deteriorate the picture quality, particularly the resolution. Although various measures have been proposed to reduce video noise caused by frequency modulation, they are not always sufficiently effective. For example, an emphasizing technique has been employed to reduce video noise. However, this technique creates an over-modulation problem. Home VTRs employ a noise cancelling or reduction circuit to cancel noise by adding a high-frequency low-level signal derived from a video signal to the video signal having its phase reversed. However, the circuit exhibits a great loss of signal gain. Another type of noise reduction circuit reduces noise by utilizing line correlation. However, the circuit requires an expensive 1 H delay line.

Referring to Figure 5, there is illustrated an embodiment of video noise reduction circuit in accordance with the invention, incorporated in the VTR of Figure 1. The wide-band luminance signal $G_L+Y_H$ from the matrix circuit 2 (Figure 1) is supplied to a band splitter circuit 10. The band splitter circuit 10 includes a low-pass filter 11, a delay circuit 12, and a subtractor 13. The low-pass filter 11, which receives the wide-band luminance signal at its input, has a cut-off frequency of about 10 MHz and passes the lower-band luminance signal $G_L$ to its output. The delay circuit 12, which is also connected to the matrix circuit 2, delays the wide-band luminance signal $G_L+Y_H$ by a predetermined time corresponding to the time by which the lower-band luminance signal $G_L$ is delayed in the low-pass filter 11, so that the wide-band luminance signal $G_L+Y_H$ can be timed to correspond to the lower-band luminance signal $G_L$. The subtractor 13, connected to the circuits 11 and 12, subtracts the lower-band luminance signal $G_L$ from the wide-band luminance signal $G_L+Y_H$ to produce an upper-band luminance signal $Y_H$. Thus, the band splitter circuit 10 splits the wide-band luminance signal $G_L+Y_H$ into a lower-band luminance signal $G_L$ and an upper-band luminance signal $Y_H$. The lower-band luminance signal $G_L$ has a frequency band below about 10 MHz, as shown in Figure 6A, and the upper-band luminance signal $Y_H$ has a frequency band ranging from about 10 MHz to about 20 MHz, as shown in Figure 6B.

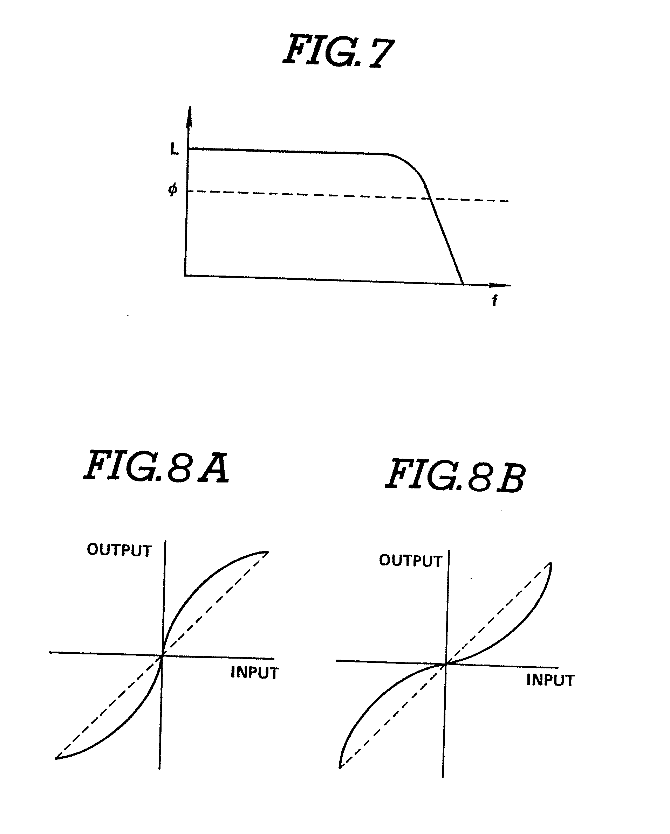

The band splitter circuit 10 has a flat phase (group delay) versus frequency characteristic within the frequency range below the cut-off frequency, as indicated by the broken line $\phi$ of Figure 7, and tends to reduce noise without causing distortion of the frequency modulated video signals.

Returning to Figure 5, the upper-band luminance signal $Y_H$ is supplied to a level expansion circuit 14. The level expansion circuit 14 has an output versus input characteristic, as shown in Figure 8A, and tends to expand or emphasize the low level components of the upper-band luminance signal $Y_H$. The level expanded signal is applied from the level expansion circuit 14 to an adder 15 which receives an additional input from the low-pass filter 11. The adder 15 adds the level expanded upper-band luminance signal to the lower-band luminance signal $G_L$. The output of the adder 15 is coupled to the signal processing circuit 3 (Figure 1). As described previously, the signal processing circuit 3 time-base expands the added signal and splits the time-base expanded signal into first and second narrow-band luminance signals $G_1$ and $G_2$ having a double time axis and a halved bandwidth (10 MHz). The first narrow-band luminance signal $G_1$ is supplied to the FM modulator 4c which converts it into a corresponding FM signal. This frequency modulated signal is supplied to the third magnetic head 5c for recording the FM modulated first narrow-band luminance signal on the third track. Similarly, the second narrow band luminance signal $G_2$ is supplied to the FM modulator 4d which converts it into a corresponding FM signal. This frequency modulated signal is supplied to the fourth magnetic head 5d for recording the second FM modulated narrow-band luminance signal on the fourth track.

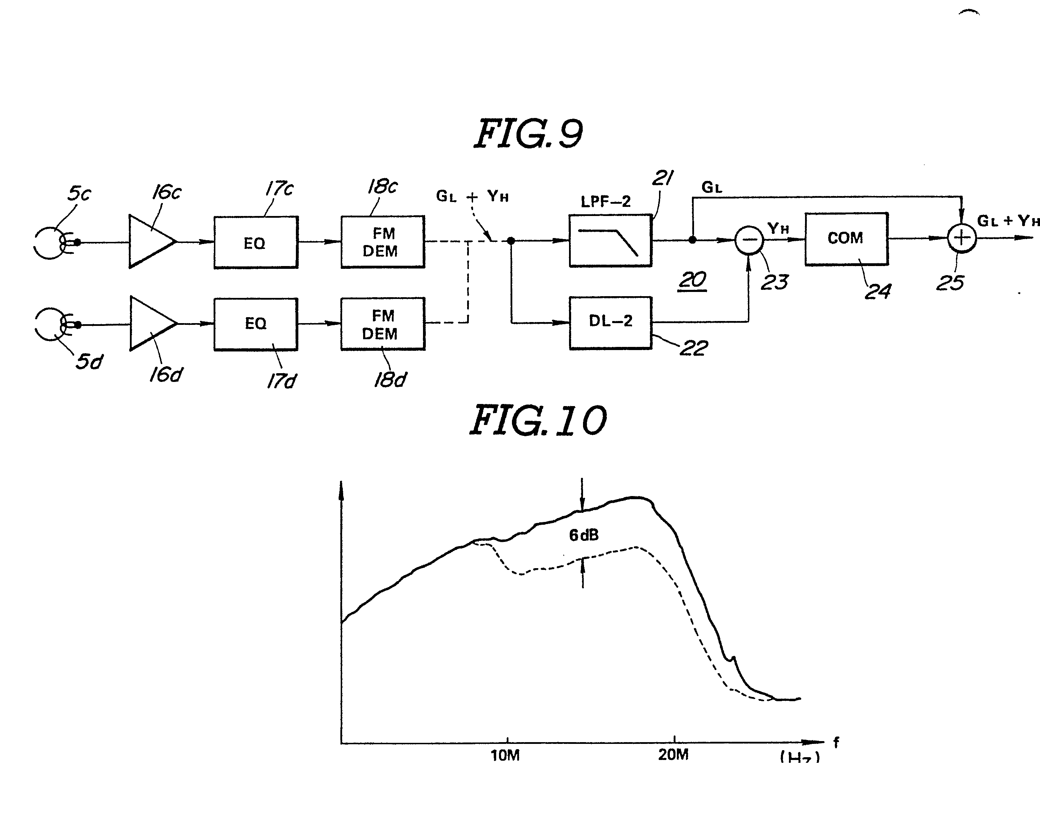

Referring to Figure 9, there is illustrated a video noise reduction circuit incorporated in a video signal reproducing apparatus. The magnetic head 5c reproduces the FM modulated first narrow-band signal recorded on the third track of the magnetic tape. The reproduced FM signal is fed through an amplifier circuit 16c and an equalizer circuit 17c to an FM demodulator 18c which provides a signal in the form of a first narrow-band signal corresponding to the modulation of the input FM signal. Similarly, the magnetic head 5d reproduces the FM modulated second narrow-band signal recorded on the fourth track of the magnetic tape. The reproduced FM signal is fed through an amplifier circuit 16d and an equalizer circuit 17d to an FM demodulator 18d which provides a signal in the form of a second narrow-band signal corresponding to the modulation of the input FM signal.

The first and second narrow-band signals are supplied to a signal processing circuit which operates in a direction opposite to the operation of the signal processing circuit 3 (Figure 1). That is, the signal processing circuit adds the first and second narrow-band signals and time-base compresses the resulting signal to produce a wide-band signal $G_L+Y_H$. The wide-band signal $G_L+Y_H$ is supplied to a band splitter circuit 20 which is similar to the band splitter circuit 10 (Figure 5). The band splitter circuit 20 includes a low-pass filter 21, a delay circuit 22 and a subtractor 23. The low-pass filter 21, which receives the wide-band signal at its input, has a cut-off frequency of about 10 MHz and communicates the lower-band signal $G_L$ to its output. The delay circuit 22, delays the wide-band signal $G_L+Y_H$ by a predetermined time corresponding to the time by which the lower-band signal $G_L$ is delayed in the low-pass filter 21 so that the lower-band signal can be timed to correspond to the lower-band signal. The subtractor 23, connected to the circuits 21 and 22, subtracts the lower-band signal $G_L$ from the wide-band signal $G_L+Y_H$ to produce an upper-band signal $Y_H$. In such a manner, the band splitter circuit 20 splits the wide-band signal $G_L+Y_H$ into a lower-band signal $G_L$ and an upper-band signal $Y_H$. The upper-band signal $Y_H$ is supplied to a level compression circuit 24. The level compression circuit 24 has an output versus input characteristic, as shown in Figure 8B, and tends to compress or de-emphasize the low level components of the upper-band signal $V_H$. The level compressed signal is supplied from the level compression circuit 24 to an adder 25 which receives an additional input from the low-pass filter 21. The adder 25 adds the level compressed upper-band signal to the lower-band signal $G_L$ to produce a wide-band signal $G_L+Y_H$ which corresponds to the wide-band luminance signal produced at the output of the matrix circuit 2 (Figure 1).

As can be seen from the foregoing, the embodiment provides a video noise reduction circuit which reduces video noise by employing a level expansion circuit 14 for expanding the low level components of the upper-band luminance signal before the wide-band luminance signal is frequency modulated in a recording mode, and a level compression circuit 24 for compressing the low level components of the frequency demodulated signal in the reproducing mode. Although the expansion and compression circuits 14 and 24 are non-linear circuits, they follow respective band splitter circuits 10 and 20 having a flat phase versus frequency characteristic. Therefore, the video noise reduction circuit can reduce video noise without causing ringing or other distortion of the frequency modulated video signal.

Figure 10 is a graph showing the effect of frequency on noise level. The solid curve relates to the previously prepared video signal recording apparatus and the broken curve relates to a video signal recording apparatus employing a video noise reducing circuit embodying the invention. It can be seen from Figure 10 that the video noise reduction circuit provides about a 6dB noise reduction in the frequency range of 10 MHz to 20 MHz.

Although the invention has been described in connection with a high definition home VTR, it could readily be applied to other VTRs to frequency modulate a luminance signal before it is recorded on a magnetic recording medium.

## CLAIMS

1. A video noise reduction circuit for use in a recording apparatus for recording red, blue and green primary colour component video signals on a plurality of separate tracks of a magnetic recording medium, the circuit comprising:

means (4a, 4b) for frequency modulating the red and blue primary colour component video signals and recording the frequency modulated signals on separate tracks of the magnetic recording medium; and

a matrix circuit (2) for matrixing the red, blue and green primary colour component video signals to provide a wide-band luminance signal;

characterized by:

a band splitter circuit (10) connected to the matrix circuit (2) for splitting the wide-band luminance signal into lower and upper-band luminance signals;

means (14) connected to the band splitter circuit (10) for expanding the low level component of the upper-band luminance signal to produce a level expanded upper-band luminance signal;

an adder circuit (15) for adding the lower-band luminance signal and the level expanded upper-band luminance signal;

means (3) connected to the adder circuit (15) for time-base expanding the added luminance signal and separating the time-base expanded luminance signal into narrow-band luminance signals; and

means (4a, 4b) for frequency modulating the narrow-band luminance signals and recording the frequency modulated signals on separate tracks of the magnetic recording medium.

2. A circuit according to claim 1 wherein the band splitter circuit (10) includes a low-pass filter (11) connected to the matrix circuit (2), said low-pass filter (11) having a cut-off frequency corresponding to the lowest frequency of the upper-band luminance signal for communicating the lower-band luminance signal, a delay circuit (12) connected to the matrix circuit (2) for delaying the wide-band luminance signal to correspond to the lower-band luminance signal, and a subtractor (13) for subtracting the lower-band luminance signal fed from said low-pass filter (11) from the wide-band luminance sinal fed from said delay circuit (12).

3.   A circuit according to claim 2 wherein said low-pass filter (11) has a cut-off frequency of about 10 MHz.

4.   A circuit according to claim 1 wherein the wide-band luminance signal has a cut-off frequency of about 20 MHz and the narrow-band luminance signals each have a cut-off frequency of about 10 MHz.

## FIG.1

## FIG.2

## FIG.3

## FIG.4

## FIG.5

## FIG.6

# FIG.7

# FIG.8A

# FIG.8B

*FIG.9*

*FIG.10*